# EUROPEAN PATENT APPLICATION

(11) **EP 3 473 923 A1**
(43) Date of publication of application: **24.04.2019**
(21) Application number: 18201098.3
(22) Date of filing: 18.10.2018
(51) Int. Cl.: F21V 8/00, G02F 1/13363

(54) **POLARIZED TYPE VIEWING ANGLE CONTROL DEVICE, POLARIZED TYPE VIEWING ANGLE CONTROL DISPLAY APPARATUS AND POLARIZED TYPE VIEWING ANGLE CONTROL LIGHT SOURCE MODULE**

(30) Priority: 23.10.2017 CN 201710991534
(71) Applicant: Coretronic Corporation, Hsin-Chu 300 (TW)
(72) Inventor: CHEN, PING-YEN, 300 Hsin-Chu (TW); FANG, CHUNG-YANG, 300 Hsin-Chu (TW); HSU, HSIUNG-CHUN, 300 Hsin-Chu (TW)
(74) Representative: Ter Meer Steinmeister & Partner

(57) **Abstract**

A polarized type viewing angle control device including a first polarizer (P1), a second polarizer (P2), a first O-plate compensation film (O1), and a second O-plate compensation film (O2) is provided. The first polarizer has a first transmission axis. The second polarizer has a second transmission axis parallel to the first transmission axis. The first and second O-plate compensation films are located between the first and second polarizers and respectively have a first optical axis and a second optical axis. An orthogonal projection of the first optical axis on the first polarizer and an orthogonal projection of the second optical axis on the second polarizer are parallel or perpendicular to the first transmission axis and the second transmission axis. The second optical axis and the first optical axis have opposite inclination directions. A polarized type viewing angle control display device and a polarized type viewing angle control light source module are also provided.

## Description

This application claims the priority of China application serial no. 201710991534.9, filed on October 23, 2017.

### BACKGROUND OF THE INVENTION

### 1. Field of the Invention

The invention relates to an optical device, a display apparatus, and a light source module, and particularly relates to a polarized type viewing angle control device, a polarized type viewing angle control display apparatus, and a polarized type viewing angle control light source module.

### 2. Description of Related Art

In general, in order to be viewable for a plurality of viewers at the same time, a display apparatus is usually provided with a display effect of wide viewing angle. However, in some circumstances or occasions, such as browsing private webpage or confidential information or inputting a password in a public occasion, such private or confidential information may be peeped by others and leaked due to the display effect of wide viewing angle. In order to protect privacy, it is common to dispose a light control film (LCF) in front of the display apparatus, and filter out light beams at a great angle. However, in addition to being expensive and thick, the light control film also reduces about 30% of the overall luminance of the display apparatus. Besides, the periodic structure of the light control film may easily generate a Moiré pattern when used with the display apparatus, so the display quality may be affected.

The information disclosed in this "BACKGROUND OF THE INVENTION" section is only for enhancement of understanding of the background of the described technology and therefore it may contain information that does not form the prior art that is already known to a person of ordinary skill in the art. Further, the information disclosed in this "BACKGROUND OF THE INVENTION" section does not mean that one or more problems to be resolved by one or more embodiments of the invention was acknowledged by a person of ordinary skill in the art.

### SUMMARY OF THE INVENTION

The invention provides a polarized type viewing angle control device capable of limiting a viewing angle, reducing Moire pattern, and preventing a significant decrease in luminance.

The invention also provides a polarized type viewing angle control display apparatus and a polarized type viewing angle control light source module using the polarized type viewing angle control device.

Other objects and advantages of the invention can be further illustrated by the technical features broadly embodied and described as follows.

In order to achieve one, some, or all of the objects, an embodiment of the invention provides a polarized type viewing angle control device including a first polarizer, a second polarizer, a first O-plate compensation film, and a second O-plate compensation film. The first polarizer has a first transmission axis. The second polarizer is located at a side of the first polarizer and has a second transmission axis. The first O-plate compensation film is located between the first polarizer and the second polarizer and has a first optical axis. The second O-plate compensation film is located between the first O-plate compensation film and the second polarizer and has a second optical axis. The first transmission axis is parallel to the second transmission axis. An orthogonal projection of the first optical axis on the first polarizer is parallel or perpendicular to the first transmission axis and the second transmission axis. The second optical axis and the first optical axis have opposite inclination directions. An orthogonal projection of the second optical axis on the second polarizer is parallel or perpendicular to the first transmission axis and the second transmission axis.

In some embodiments, an acute angle included between the first optical axis and the first polarizer is in a range from 20° to 50°.

Preferably, an acute angle included between the second optical axis and the second polarizer is in a range from 20° to 50°.

Preferably, a difference between the acute angle included between the first optical axis and the first polarizer and the acute angle included between the second optical axis and the second polarizer is no more than 5°.

Preferably, a phase retardation value of the first O-plate compensation film is in a range from 100 nm to 400 nm.

Preferably, a phase retardation value of the second O-plate compensation film is in a range from 100 nm to 400 nm.

Preferably, a difference between the phase retardation value of the first O-plate compensation film and the phase retardation value of the second O-plate compensation film is no more than 50 nm.

In some embodiments, the polarized type viewing angle control device may further comprise an adhesive layer, located between the first O-plate compensation film and the second O-plate compensation film.

In some embodiments, the polarized type viewing angle control device may further comprise a third polarizer, wherein the second polarizer is located between the third polarizer and the second O-plate compensation film.

In some embodiments, the polarized type viewing angle control device may further comprise a compensation film, located between the first O-plate compensation film and the second O-plate compensation film, between the first O-plate compensation film and the first polarizer, or between the second O-plate compensation film and the second polarizer.

Preferably, the compensation film is a C-plate compensation film or an O-plate compensation film.

In order to achieve one, some, or all of the objects, an embodiment of the invention provides a polarized type viewing angle control display apparatus including a display module and a polarized type viewing angle control device. The display module includes a first polarizer. The first polarizer has a first transmission axis. The polarized viewing angle control device is disposed at side of the display module closer to the first polarizer. The polarized type viewing angle control device includes a second polarizer, a first O-plate compensation film and a second O-plate compensation film. The second polarizer has a second transmission axis. The first O-plate compensation film is located between the first polarizer and the second polarizer and has a first optical axis. The second O-plate compensation film is located between the first O-plate compensation film and the second polarizer and has a second optical axis. The first transmission axis is parallel to the second transmission axis. An orthogonal projection of the first optical axis on the first polarizer is parallel or perpendicular to the first transmission axis and the second transmission axis. The second optical axis and the first optical axis have opposite inclination directions. An orthogonal projection of the second optical axis on the second polarizer is parallel or perpendicular to the first transmission axis and the second transmission axis.

In order to achieve one, some, or all of the objects, an embodiment of the invention provides a polarized type viewing angle control light source module including a light source module and a polarized type viewing angle control device. The polarized type viewing angle control device is disposed at a light emitting side of the light source module and includes a first polarizer, a second polarizer, a first O-plate compensation film, and a second O-plate compensation film. The first polarizer has a first transmission axis. The second polarizer is located at a side of the first polarizer and has a second transmission axis. The first O-plate compensation film is located between the first polarizer and the second polarizer and has a first optical axis. The second O-plate compensation film is located between the first O-plate compensation film and the second polarizer and has a second optical axis. The first transmission axis is parallel to the second transmission axis. An orthogonal projection of the first optical axis on the first polarizer is parallel or perpendicular to the first transmission axis and the second transmission axis. The second optical axis and the first optical axis have opposite inclination directions. An orthogonal projection of the second optical axis on the second polarizer is parallel or perpendicular to the first transmission axis and the second transmission axis.

Based on the above, the embodiments of the invention have at least one of the following advantages or effects. In the polarized type viewing angle control device, the polarized type viewing angle control display apparatus, and the polarized type viewing angle control light source module according to the embodiments of the invention, the required phase retardation value is provided by two O-plate compensation films together with two polarizers, so as to limit the viewing angle at the azimuth angle to be controlled. Since the polarized type viewing angle control device does not control the viewing angle by using a periodic structure, Moire patterns may be avoided. Compared with known products, such as a light control film, the polarized viewing angle control device has a higher luminance from a center view, a lower cost, and a thinner thickness. By limiting the viewing angle in a single direction (e.g., lengthwise or widthwise direction), the polarized type viewing angle control device may be applied in a full anti-peep display or a vehicle display.

Other objects, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1A is a schematic cross-sectional view illustrating a polarized type viewing angle control device according to a first embodiment of the invention.
FIGs. 1B and 1C are respectively two partially enlarged schematic cross-sectional views illustrating two O-plate compensation films of FIG. 1A.
FIG. 1D is a diagram illustrating a relation between transmittance and zenith angle of a polarized type viewing angle control device of a first embodiment at different acute angles in a direction with an azimuth angle of 0°-180°.
FIG. 1E is a diagram illustrating a relation between transmittance and zenith angle of the polarized type viewing angle control device of the first embodiment at different acute angles in a direction with an azimuth angle of 90°-270°.
FIG. IF is a diagram illustrating a relation between transmittance and zenith angle of the polarized type viewing angle control device of the first embodiment at different phase retardation values in a direction with an azimuth angle of 0°-180°.
FIG. 1G is a diagram illustrating a relation between transmittance and zenith angle of the polarized type viewing angle control device of the first embodiment at different phase retardation values in a direction with an azimuth angle of 90°-270°.
FIGs. 2 to 5 are respectively schematic cross-sectional views illustrating polarized type viewing angle control devices according to second to fifth embodiments of the invention.
FIG. 6 is a schematic cross-sectional view illustrating a polarized type viewing angle control display apparatus according to a first embodiment of the invention.
FIG. 7 is a schematic cross-sectional view illustrating a polarized type viewing angle control display apparatus according to a second embodiment of the invention.
FIG. 8 is a schematic cross-sectional view illustrating a polarized type viewing angle control light source module according to an embodiment of the invention.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

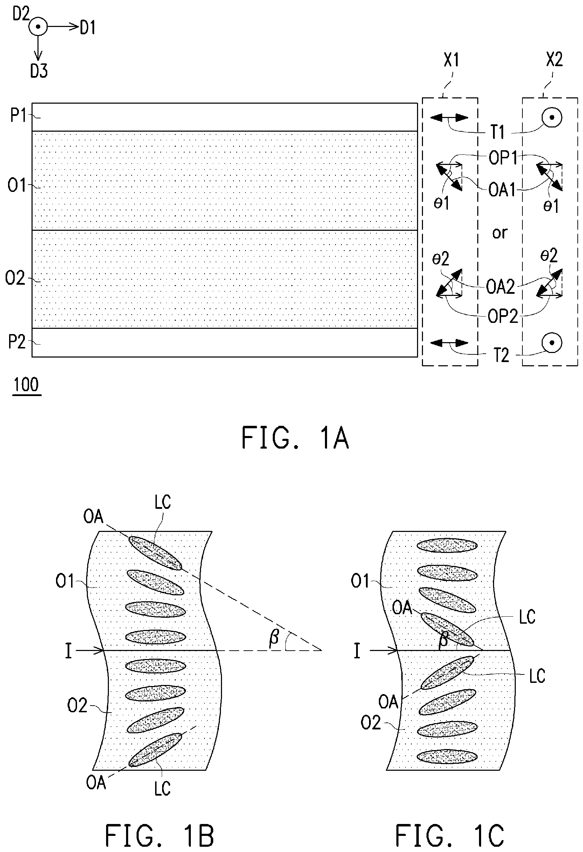

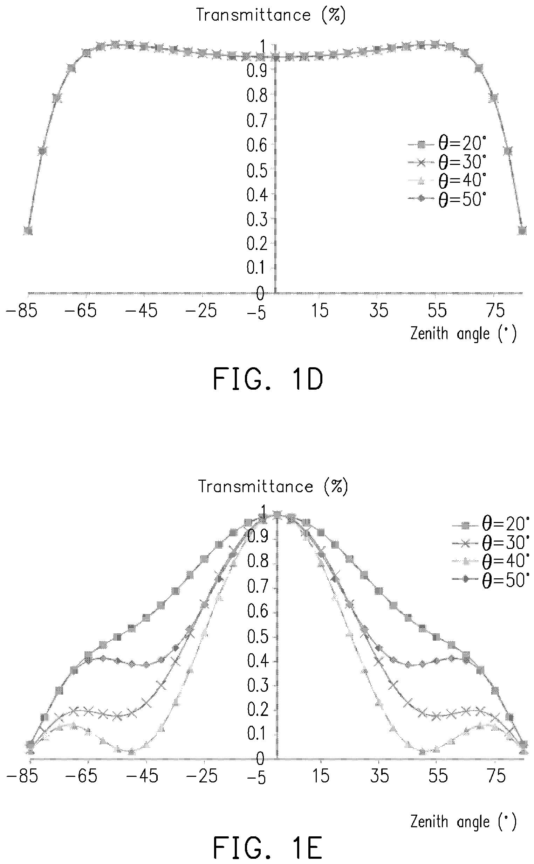

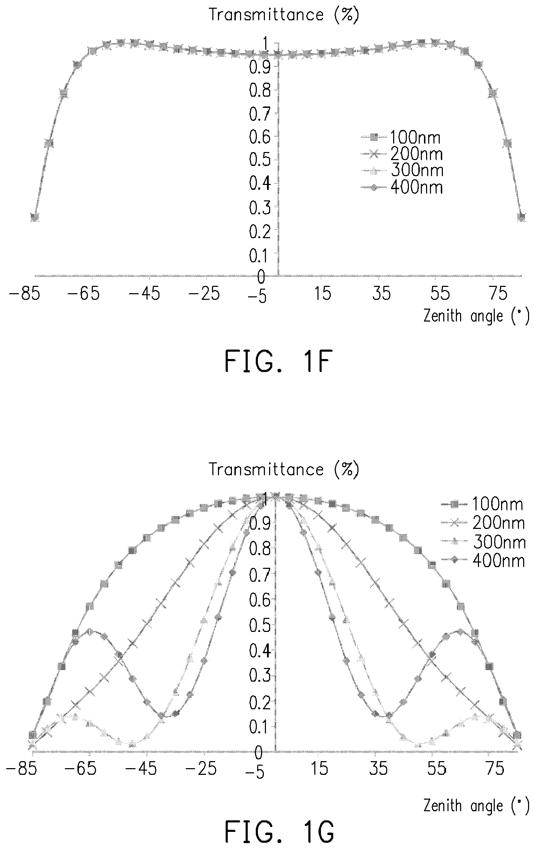

FIG. 1A is a schematic cross-sectional view illustrating a polarized type viewing angle control device according to a first embodiment of the invention. Referring to FIG. 1, a polarized type viewing angle control device 100 in the first embodiment of the invention includes a first polarizer P1, a second polarizer P2, a first O-plate compensation film O1, and a second O-plate compensation film O2.

The first polarizer P1 has a first transmission axis T1. The second polarizer P2 is located at a side of the first polarizer P1 and has a second transmission axis T2. The first O-plate compensation film O1 is located between the first polarizer P1 and the second polarizer P2 and has a first optical axis OA1. The second O-plate compensation film O2 is located between the first O-plate compensation film O1 and the second polarizer P2 and has a second optical axis OA2. The first transmission axis T1 is parallel to the second transmission axis T2. An orthogonal projection OP1 of the first optical axis OA1 on the first polarizer P1 is parallel or perpendicular to the first transmission axis T1 and the second transmission axis T2. The second optical axis OA2 and the first optical axis OA1 have opposite inclination directions, and an orthogonal projection OP2 of the second optical axis OA2 on the second polarizer P2 is parallel or perpendicular to the first transmission axis T1 and the second transmission axis T2.

For example, as shown in a dash line frame X1, the first transmission axis T1 and the second transmission axis T2 may respectively extend in a first direction D1 parallel to the first polarizer P1. In addition, the orthogonal projection OP1 of the first optical axis OA1 on the first polarizer P1 and the orthogonal projection OP2 of the second optical axis OA2 on the second polarizer P2 are parallel to the first transmission axis T1 and the second transmission axis T2. Moreover, an acute angle included between the first optical axis OA1 and the first polarizer P1 (i.e., an acute angle θ1 included between the first optical axis OA1 and the orthogonal projection OP1) is the same as or similar to an acute angle included between the second optical axis OA2 and the second polarizer P2 (i.e., an acute angle θ2 included between the second optical axis OA2 and the orthogonal projection OP2). Here, the acute angle θ1 being similar to the acute angle θ2 indicates that a difference between the acute angle θ1 and the acute angle θ2 is no more than5 five degrees.

In the embodiment, the polarized type viewing angle control device 100 is able to limit the viewing angle in a second direction D2. The second direction D2 is perpendicular to the first direction D1 and a thickness direction of the polarized type viewing angle control device 100 (e.g., a third direction D3). More specifically, an anti-peep direction of the polarized type viewing angle control device 100 may be parallel to the first polarizer P1 (or the second polarizer P2) and perpendicular to the orthogonal projection OP1 of the first optical axis OA1 (or the orthogonal projection OP2 of the second optical axis OA2). In the configuration of the dash line frame X1, the orthogonal projection OP1 of the first optical axis OA1 and the orthogonal projection OP2 of the second optical axis OA2 are parallel to the first direction D1. Therefore, the polarized type viewing angle control device 100 limits the viewing angle in the second direction D2. In another embodiment, the orthogonal projection OP1 of the first optical axis OA1 and the orthogonal projection OP2 of the second optical axis OA2 may be parallel to the second direction D2. Accordingly, the polarized type viewing angle control device 100 may limit the viewing angle in the first direction D1.

In addition, as shown in a dash line frame X2, the first transmission axis T1 and the second transmission axis T2 may respectively extend in the second direction D2. In addition, the orthogonal projection OP1 of the first optical axis OA1 on the first polarizer P1 and the orthogonal projection OP2 of the second optical axis OA2 on the second polarizer P2 are perpendicular to the first transmission axis T1 and the second transmission axis T2. Moreover, the acute angle θ1 may be the same as or similar to the acute angle θ2. In the configuration of the dash line frame X2, the orthogonal projection OP1 of the first optical axis OA1 and the orthogonal projection OP2 of the second optical axis OA2 are parallel to the first direction D1. Therefore, the polarized type viewing angle control device 100 limits the viewing angle in the second direction D2.

FIGs. 1B and 1C are respectively two partially enlarged schematic cross-sectional views illustrating two O-plate compensation films of FIG. 1A. Referring to FIGs. 1B and 1C, the first O-plate compensation film O1 and the second O-plate compensation film O2 respectively have a plurality of liquid crystal molecules LC. The liquid crystal molecules LC respectively have optical axes OA, and angles β are included between the optical axes OA of the liquid crystal molecules LC and an interface I between the first O-plate compensation film O1 and the second O-plate compensation film O2. In the first O-plate compensation film O1 and the second O-plate compensation film O2, the angles β become greater as a distance between the liquid crystal molecules LC and the interface I increases (Referring to FIG. 1B). Alternatively, the angles β may become smaller as the distance between the liquid crystal molecules LC and the interface I increases (Referring to FIG. 1C). In the first O-plate compensation film O1, an average of the angles β included between the optical axes OA of the liquid crystal molecules LC and the interface I is the acute angle θ1 shown in FIG. 1A. Similarly, in the second O-plate compensation film O2, an average of the angles β included between the optical axes OA of the liquid crystal molecules LC and the interface I is the acute angle θ2 shown in FIG. 1A.

FIG. 1D is a diagram illustrating a relation between transmittance and zenith angle of a polarized type viewing angle control device of a first embodiment at different acute angles in a direction with an azimuth angle of 0°-180°. FIG. 1E is a diagram illustrating a relation between transmittance and zenith angle of the polarized type viewing angle control device of the first embodiment at different acute angles in a direction with an azimuth angle of 90°-270°. Specifically, FIGs. 1D and 1E are results obtained through simulation based on the configuration where the dash line frame X1 of FIG. 1A is used with the liquid crystal arrangement of FIG. 1C, wherein the first direction D1 and an opposite direction thereof correspond to the azimuth angle of 0°-180°, and the second direction D2 and an opposite direction thereof correspond to the azimuth angle of 90°-270°. In addition, the acute angle θ1 and the acute angle θ2 of FIG. 1A are represented by an acute angle θ in FIGs. 1D and IE, where θ=20° indicates that the acute angle θ1 and the acute angle θ2 in FIG. 1A are both 20°. Other angles may be inferred based on the same principle. Therefore, details in this regard will not be repeated in the following.

As shown in FIGs. 1D and IE, in the configuration that the first transmission axis of the first polarizer and the second transmission axis of the second polarizer respectively extend in the first direction, in the case where the acute angle θ is within a range from 20° to 50°, the transmittance of the polarized type viewing angle control device at the azimuth angle of 0°-180° (i.e., in the first direction D1 and the opposite direction thereof) barely changes when the zenith angle is within a range from -55° to 55°. In addition, the transmittance of the polarized type viewing angle control device at the azimuth angle of 90°-270° (i.e., in the second direction D2 and the opposite direction thereof) gradually decreases as an absolute value of the zenith angle gradually becomes greater. In other words, the polarized type viewing angle control device 100 has the effect of limiting the viewing angle in the direction of the azimuth angle of 90°-270° (i.e., in the second direction D2 and the opposite direction thereof).

In addition, according to FIG. IE, the viewing angle of the polarized type viewing angle control device may become narrowed as the acute angle θ becomes greater. Besides, as the acute angle θ becomes greater, the polarized type viewing angle control device gradually shows light leakage at a large angle. As the acute angle θ becomes smaller, the viewing angle of the polarized type viewing angle control device gradually becomes broader. Hence, by keeping the acute angle θ within a range from 20° to 50°, the polarized type viewing angle control device may have a narrowed viewing angle and have less light leakage at a large angle. Specifically, in the embodiment of FIG. 1A, the acute angle included between the first optical axis OA1 and the first polarizer P1 (i.e., the acute angle θ1 included between the first optical axis OA1 and the orthogonal projection OP1) falls within the range from 20° to 50°, and the acute angle included between the second optical axis OA2 and the second polarizer P2 (i.e., the acute angle θ2 included between the second optical axis OA2 and the orthogonal projection OP2) falls within the range from 20° to 50°. In addition, a difference between the acute angle θ1 and the acute angle θ2 is no more than 5 degrees.

FIG. 1F is a diagram illustrating a relation between transmittance and zenith angle of the polarized type viewing angle control device of the first embodiment at different phase retardation values in a direction with an azimuth angle of 0°-180°. FIG. 1G is a diagram illustrating a relation between transmittance and zenith angle of the polarized type viewing angle control device of the first embodiment at different phase retardation values in a direction with an azimuth angle of 90°-270°. More specifically, FIGs. 1F and 1G are results of simulation obtained in the configuration where the dash line frame X1 of FIG. 1A is used with the liquid crystal arrangement of FIG. 1C. In FIGs. IF and 1G, 100 nm indicates that a phase retardation value of the first O-plate compensation film and a phase retardation value of the second O-plate compensation film are both 100 nm. Other phase retardation values may be inferred based on the same principle. Therefore, details in this regard will not be repeated in the following.

As shown in FIGs. 1F and 1G, in the configuration that the first transmission axis of the first polarizer and the second transmission axis of the second polarizer respectively extend in the first direction, in the case where the phase retardation value of the first O-plate compensation film and the phase retardation value of the second O-plate compensation film respectively fall within a range from 100 nm to 400 nm, the transmittance of the polarized type viewing angle control device at the azimuth angle of 0°-180° (i.e., in the first direction D1 and the opposite direction thereof) barely changes when the zenith angle is within a range from -55° to 55°. In addition, the transmittance of the polarized type viewing angle control device 100 at the azimuth angle of 90°-270° (i.e., in the second direction D2 and the opposite direction thereof) gradually decreases as the absolute value of the zenith angle gradually increases. In other words, the polarized type viewing angle control device 100 has the effect of limiting the viewing angle in the direction of the azimuth angle of 90°-270° (i.e., in the second direction D2 and the opposite direction thereof).

In addition, according to FIG. 1G, the viewing angle of the polarized type viewing angle control device may be narrowed as the phase retardation value of the O-shape compensation film increases. Besides, as the phase retardation value of the O-shape compensation film increases, the polarized type viewing angle control device gradually shows some light leakage at a large angle. As the phase retardation value of the O-shape compensation film decreases, the viewing angle of the polarized type viewing angle control device gradually becomes broader. Hence, by keeping the phase retardation value within a range from 100 nm to 400 nm, the polarized type viewing angle control device may have a narrowed viewing angle and have no light leakage at a large angle. Specifically, in the embodiment of FIG. 1A, the phase retardation value of the first O-plate compensation film O1 falls within the range from 100 nm to 400 nm, and the phase retardation value of the second O-plate compensation O2 falls within the range from 100 nm to 400 nm. In addition, a difference between the phase retardation value of the first O-plate compensation film O1 and the phase retardation value of the second O-plate compensation film O2 is no more than 50 nm.

In addition, in the configuration of FIG. 1A, when the first polarizer P1 is closer to the user, the first polarizer P1 may be an absorptive polarizer, for example, and the second polarizer P2 may be an absorptive polarizer or a reflective polarizer. Since the polarization (defined as the capability of filtering out light beams in a specific polarization direction) of the absorptive polarizer is higher than the polarization of the reflective polarizer, when the second polarizer P2 is an absorptive polarizer, the polarized type viewing angle control device 100 may have a desirable anti-peep effect. Alternatively, when the second polarizer P2 is a reflective polarizer, the polarized viewing angle control device 100 may have a desirable light utilization rate.

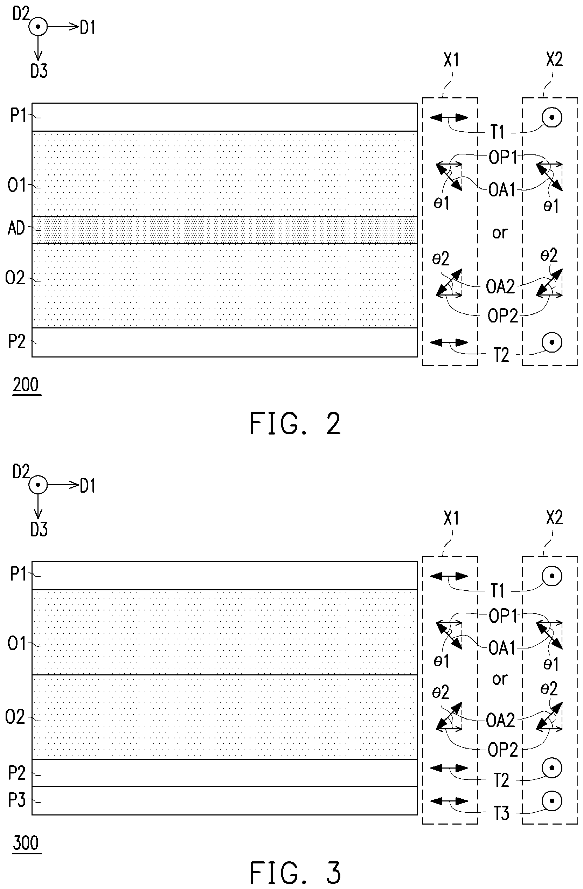

FIGs. 2 to 5 are respectively schematic cross-sectional views illustrating polarized type viewing angle control devices according to second to fifth embodiments of the invention. Polarized viewing angle control devices in FIGs. 2 to 5 are similar to the polarized viewing angle control device 100 shown in FIG. 1A. In addition, like components are referred to by like reference symbols, and detailed descriptions thereof will not be repeated in the following.

Referring to FIG. 2, a polarized viewing angle control device 200 mainly differs from the polarized viewing angle control device of FIG. 1A in that the polarized viewing angle control device 200 further includes an adhesive layer AD. The adhesive layer AD is located between the first O-plate compensation film O1 and the second O-plate compensation film O2 to bond the first O-plate compensation film O1 and the second O-plate compensation film O2. The modification is applicable to all the following embodiments. Therefore, details in this regard will not be repeated in the following.

Referring to FIG. 3, a polarized viewing angle control device 300 mainly differs from the polarized viewing angle control device of FIG. 1A in that the polarized viewing angle control device 300 further includes a third polarizer P3, and the second polarizer P2 is located between the third polarizer P3 and the second O-plate compensation film O2. The third polarizer P3 has a third transmission axis T3 parallel to the first transmission axis T1 and the second transmission axis T2. The third polarizer P3 may be an absorptive polarizer or a reflective polarizer, preferably a reflective polarizer. When the polarization of the second polarizer P2 is insufficient (indicating that the second polarizer P2 is unable to effectively filter out light beams in a specific polarization direction intended to be filtered out), the light filtering effect at the side where the second polarizer is located may be facilitated by disposing the third polarizer P3, and the anti-peep effect is consequently facilitated. The modification is applicable to all the following embodiments. Therefore, details in this regard will not be repeated in the following.

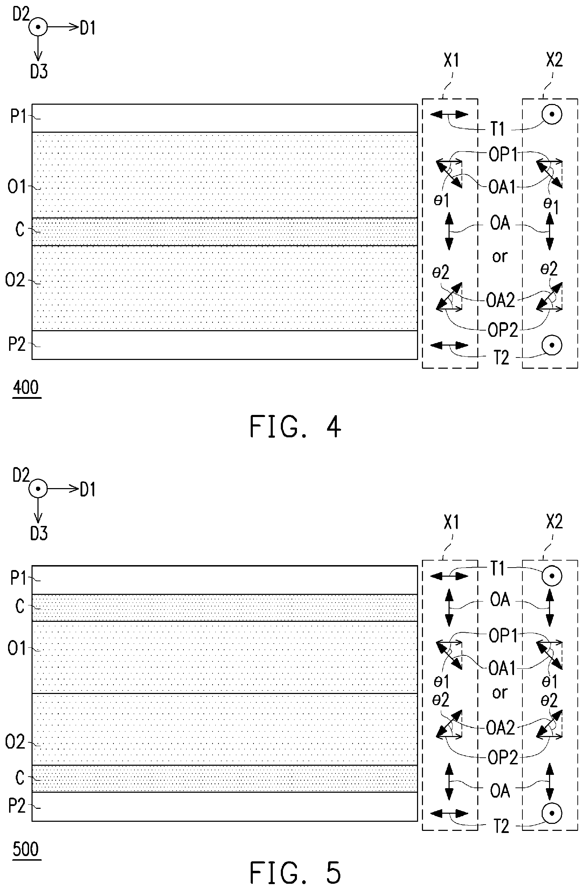

Referring to FIG. 4, a polarized viewing angle control device 400 mainly differs from the polarized viewing angle control device of FIG. 1A in that the polarized viewing angle control device 400 further includes a compensation film C. The compensation film C is located between the first O-plate compensation film O1 and the second O-plate compensation film O2, and the compensation film C may be a C-plate compensation film or an O-plate compensation film. Taking the compensation film C as a C-plate compensation film as an example, the optical axis OA of the compensation film C is parallel to a thickness direction of the polarized type viewing angle control device 400 (the third direction D3). The compensation film C may serve to modify a light filtering range and the transmittance. For example, the compensation film C may offer an out-of-plane retardation of 150 nm, so as to further facilitate the anti-peep effect. It should be noted that, while FIG. 4 only illustrates one compensation film C, the number of the compensation film C may be modified based on needs, and is not limited to the illustration of FIG. 4. The modification is applicable to all the following embodiments. Therefore, details in this regard will not be repeated in the following.

Referring to FIG. 5, a polarized viewing angle control device 500 mainly differs from the polarized viewing angle control device of FIG. 1A in that the polarized viewing angle control device 500 further includes two compensation films C. One of the compensation films C is located between the first O-plate compensation film O1 and the first polarizer P1, and the other of the compensation films C is located between the second O-plate compensation film O2 and the second polarizer P2. The two compensation films C may be C-plate compensation films or O-plate compensation films. Besides, the number of the compensation films C may be modified based on needs, and is not limited to the illustration of FIG. 5. The modification is applicable to all the following embodiments. Therefore, details in this regard will not be repeated in the following.

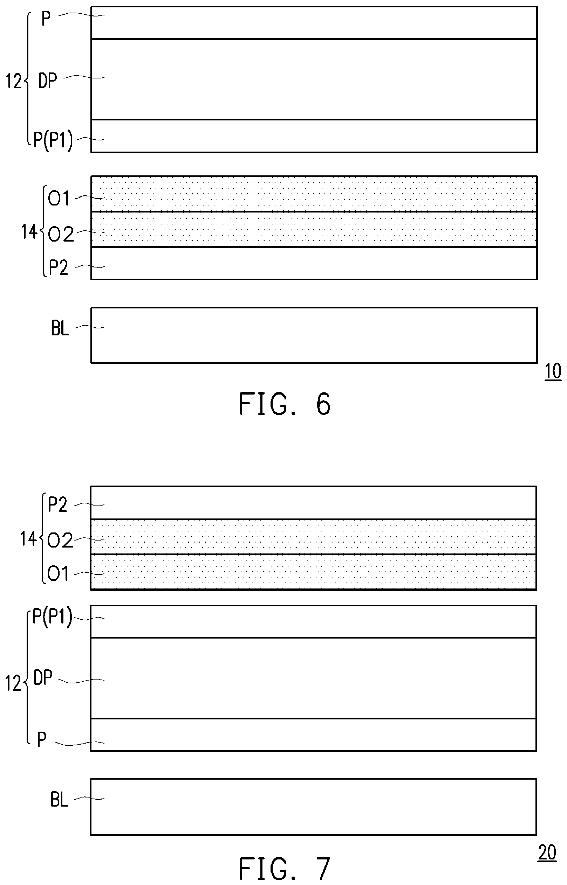

FIG. 6 is a schematic cross-sectional view illustrating a polarized type viewing angle control display apparatus according to a first embodiment of the invention. Referring to FIG. 6, a polarized type viewing angle control display apparatus 10 of the first embodiment of the invention includes a display module 12 and a polarized type viewing angle control device 14. The display module 12 includes a display panel DP and the first polarizer P1. The polarized type viewing angle control device 14 is disposed at a side of the display module 12 closer to the first polarizer P1, and the polarized type viewing angle control device 14 includes the second polarizer P2, the first O-plate compensation film O1 and the second O-plate compensation film O2. Details of the first polarizer P1, the second polarizer P2, the first O-plate compensation film O1 and the second O-plate compensation film O2 are already described above, and thus will not be repeated in the following.

The display panel DP may be a self-illuminating display panel or a non-self-illuminating display panel. When the display panel DP is a non-self-illuminating panel, the polarized viewing angle control display apparatus 10 may further include a light source module BL, such as a direct type light source module or a side type light source module, to provide an illumination beam. Alternatively, when the display panel DP is a self-illuminating display panel, the light source module BL may be omitted.

Taking a non-self-illuminating display panel as an example, when the display panel DP is a liquid crystal display panel, the display module 12 may include two polarizers P. The two polarizers P are disposed at opposite sides of the display panel DP, and transmission axes (not shown) of the two polarizers P may be parallel or perpendicular to each other. Furthermore, the transmission axis (not shown) of the polarizer P of the two polarizers P closer to the polarized type viewing angle control device 14 is parallel to the transmission axis (not shown) of the second polarizer P2. In the embodiment, the polarizer P of the two polarizers P closer to the polarized type viewing angle control device 14 serves as the first polarizer P1 in FIG. 1A. Accordingly, the polarized type viewing angle control device 14 may omit one polarizer. However, the invention is not limited thereto. In another embodiment, the polarized type viewing angle control device 14 of FIG. 6 may also adopt the polarized type viewing angle control device 100 of FIG. 1A, the polarized type viewing angle control device 200 of FIG. 2, the polarized type viewing angle control device 300 of FIG. 3, the polarized type viewing angle control device 400 of FIG. 4, or the polarized type viewing angle control device 500 of FIG. 5. Moreover, the polarized type viewing angle control device 14 of FIG. 6 may further includes the adhesive layer AD of FIG. 2, the third polarizer P3 of FIG. 3, the compensation film C of FIG. 4, or the two compensation films C of FIG. 5.

By integrating the polarized type viewing angle control device 14 and the display module 12, an azimuth angle of a display light beam emitted from the polarized type viewing angle control display apparatus 10 may be limited. Accordingly, the polarized type viewing angle display apparatus 10 has an anti-peep effect. Besides, since the polarized type viewing angle control device 14 does not control the viewing angle by using a periodic structure, Moire patterns may be avoided.

FIG. 7 is a schematic cross-sectional view illustrating a polarized type viewing angle control display apparatus according to a second embodiment of the invention. Referring to FIG. 7, a polarized type viewing angle control display apparatus 20 is similar to the polarized type viewing angle control display apparatus 10 in FIG. 6, so like or similar components are referred to by like or similar reference symbols and detailed descriptions thereof will not be repeated in the following.

The polarized type viewing angle control display apparatus 20 mainly differs from the polarized type viewing angle control display apparatus 10 of FIG. 6 in the following way. In the polarized type viewing angle control display apparatus 10 of FIG. 6, the polarized viewing angle control device 14 is located between the display module 12 and the light source module BL. In the polarized type viewing angle control display apparatus 20 of FIG. 7, the display module 12 is located between the polarized type viewing angle control device 14 and the light source module BL. Similar to the polarized type viewing angle control display apparatus 10 in FIG. 6, in the polarized type viewing angle control apparatus 20, the polarizer P of the two polarizers P closer to the polarized type viewing angle control device 14 serves as the first polarizer P1 in FIG. 1A. Accordingly, the polarized type viewing angle control device 14 may omit one polarizer. However, the invention is not limited thereto. In another embodiment, the polarized type viewing angle control device 14 of FIG. 7 may also adopt the polarized type viewing angle control device 100 of FIG. 1A, the polarized type viewing angle control device 200 of FIG. 2, the polarized type viewing angle control device 300 of FIG. 3, the polarized type viewing angle control device 400 of FIG. 4, or the polarized type viewing angle control device 500 of FIG. 5.

In addition, in FIG. 7, the first polarizer P1, the first O-plate compensation film O1, the second O-plate compensation film O2, and the second polarizer P2 are arranged in an order reversed from the order shown in FIG. 6. Besides, the polarized type viewing angle control device 14 of FIG. 7 may further include the adhesive layer AD of FIG. 2, the compensation film C of FIG. 4, or the two compensation films C of FIG. 5. In an embodiment, in addition to the second polarizer P2, the polarized type viewing angle control device 14 may further include a third polarizer (not shown). The third polarizer is disposed on a surface of the first O-plate compensation film O1 facing toward the display module 12, and the third polarizer is located between the first O-plate compensation film O1 and the first polarizer P1. In addition, a transmission axis of the third polarizer is parallel to the transmission axis (not shown) of the first polarizer P1 and the transmission axis (not shown) of the second polarizer P2. For example, the third polarizer may be a reflective polarizer. However, the invention is not limited thereto.

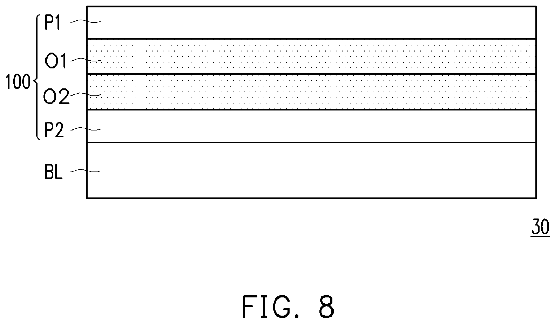

FIG. 8 is a schematic cross-sectional view illustrating a polarized type viewing angle control light source module according to an embodiment of the invention. A polarized type viewing angle control light source module 30 of the embodiment includes a light source module BL and the polarized type viewing angle control device 100. The light source module BL may be a direct light source module or a side type light source module. The polarized viewing angle control device 100 is disposed at a light emitting side of the light source module BL. In another embodiment, the polarized viewing angle control device 100 may also be replaced by the polarized viewing angle control device 200 of FIG. 2, the polarized viewing angle control device 300 of FIG. 3, the polarized viewing angle control device 400 of FIG. 4, or the polarized viewing angle control device 500 of FIG. 5.

By disposing the polarized type viewing angle control device 100 at the light emitting side of the light source module BL, an azimuth angle of an illumination light beam emitted from the polarized type viewing angle control light source module 30 is limited. Accordingly, the polarized type viewing angle control light source module 30 is applicable to an apparatus with a limited viewing angle.

In view of the foregoing, the embodiments of the invention have at least one of the following advantages or effects. In the polarized type viewing angle control device, the polarized type viewing angle control display apparatus, and the polarized type viewing angle control light source module according to the embodiments of the invention, the required phase retardation value is provided by two O-plate compensation films together with two polarizers, so as to limit the viewing angle at the azimuth angle to be controlled. Since the polarized type viewing angle control device does not control the viewing angle by using a periodic structure, Moire patterns may be avoided. Compared with known products, such as a light control film, the polarized viewing angle control device has a higher luminance from a center view, a lower cost, and a thinner thickness. By limiting the viewing angle in a single direction (e.g., lengthwise or widthwise direction), the polarized type viewing angle control device may be applied in a full anti-peep display or a vehicle display. In an embodiment, the polarized type viewing angle control device may further include a third polarizer or at least one compensation film to facilitate the anti-peep effect.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A polarized type viewing angle control device, comprising:
a first polarizer, having a first transmission axis;
a second polarizer, located at a side of the first polarizer and having a second transmission axis;
a first O-plate compensation film, located between the first polarizer and the second polarizer and having a first optical axis; and
a second O-plate compensation film, located between the first O-plate compensation film and the second polarizer and having a second optical axis,
wherein the first transmission axis is parallel to the second transmission axis, an orthogonal projection of the first optical axis on the first polarizer is parallel or perpendicular to the first transmission axis and the second transmission axis, the second optical axis and the first optical axis have opposite inclination directions, and an orthogonal projection of the second optical axis on the second polarizer is parallel or perpendicular to the first transmission axis and the second transmission axis.

2. The polarized type viewing angle control device as claimed in claim 1, wherein an acute angle included between the first optical axis and the first polarizer is in a range from 20° to 50°.

3. The polarized type viewing angle control device as claimed in claim 1 or 2, wherein an acute angle included between the second optical axis and the second polarizer is in a range from 20° to 50°.

4. The polarized type viewing angle control device as claimed in any one claim 1, 2 or 3, wherein a difference between the acute angle included between the first optical axis and the first polarizer and the acute angle included between the second optical axis and the second polarizer is no more than 5°.

5. The polarized type viewing angle control device as claimed in any one of the preceding claims, wherein a phase retardation value of the first O-plate compensation film is in a range from 100 nm to 400 nm.

6. The polarized type viewing angle control device as claimed in any one of the preceding claims, wherein a phase retardation value of the second O-plate compensation film is in a range from 100 nm to 400 nm.

7. The polarized type viewing angle control device as claimed in any one of the preceding claims, wherein a difference between the phase retardation value of the first O-plate compensation film and the phase retardation value of the second O-plate compensation film is no more than 50 nm.

8. The polarized type viewing angle control device as claimed in any one of the preceding claims, further comprising:
an adhesive layer, located between the first O-plate compensation film and the second O-plate compensation film.

9. The polarized type viewing angle control device as claimed in as claimed in any one of the preceding claims, further comprising:
a third polarizer, wherein the second polarizer is located between the third polarizer and the second O-plate compensation film.

10. The polarized type viewing angle control device as claimed in as claimed in any one of the preceding claims, further comprising:
a compensation film, located between the first O-plate compensation film and the second O-plate compensation film, between the first O-plate compensation film and the first polarizer, or between the second O-plate compensation film and the second polarizer.

11. The polarized type viewing angle control device as claimed in claim 10, wherein the compensation film is a C-plate compensation film or an O-plate compensation film.

12. A polarized type viewing angle control display apparatus, comprising:
a polarized type viewing angle control device as claimed in any one of the preceding claims; and
a display module, wherein the polarized type viewing angle control device is disposed at a side of the display module, the first polarizer is disposed in the display module.

13. A polarized type viewing angle control light source module, comprising:
a light source module; and
a polarized type viewing angle control device as claimed in any one of the preceding claims, the polarized type viewing angle control device is disposed at a light emitting side of the light source module.
